# EUROPEAN PATENT SPECIFICATION

(11) **EP 3 188 067 B1**
(45) Date of publication and mention of the grant of the patent: **10.10.2018**
(21) Application number: 15844984.3
(22) Date of filing: 06.08.2015
(51) Int. Cl.: G06F 21/57

(54) **SECURITY CONTROL METHOD AND NETWORK DEVICE**
SICHERHEITSSTEUERUNGSVERFAHREN UND NETZWERKVORRICHTUNG
PROCÉDÉ DE COMMANDE DE SÉCURITÉ ET DISPOSITIF DE RÉSEAU

(30) Priority: 26.09.2014 CN 201410505543
(43) Date of publication of application: 05.07.2017
(73) Proprietor: Huawei Technologies Co., Ltd., Longgang District Shenzhen, Guangdong 518129 (CN)
(72) Inventor: FU, Tianfu, Shenzhen Guangdong 518129 (CN); ZHOU, Chong, Shenzhen Guangdong 518129 (CN); LEI, Hao, Shenzhen Guangdong 518129 (CN); ZHU, Liang, Shenzhen Guangdong 518129 (CN); YE, Yubai, Shenzhen Guangdong 518129 (CN)
(74) Representative: Gill Jennings & Every LLP
(86) International application number: PCT/CN2015/086263
(87) International publication number: WO 2016/045458

(56) References cited:
- CN-A- 101 295 339
- CN-A- 102 063 593
- CN-A- 104 268 477
- US-A1- 2007 192 597
- US-A1- 2010 031 370
- US-A1- 2013 031 374
- STEFAN BERGER RAMÓN CÁCERES KENNETH A GOLDMAN RONALD PEREZ REINER SAILER LEENDERT VAN DOORN {STEFANB ET AL: "vTPM: Virtualizing the Trusted Platform Module", USENIX,, 2 August 2006 (2006-08-02), pages 1-16, XP061011058, [retrieved on 2006-08-02]
- Brecht Wyseur: "White-Box Cryptography", , 1 March 2009 (2009-03-01), XP055319581, ISBN: 978-94-601-8040-8 Retrieved from the Internet: URL:https://securewww.esat.kuleuven.be/cos ic/publications/thesis-152.pdf [retrieved on 2016-11-15]

## Description

### TECHNICAL FIELD

This application relates to the field of security technologies, and in particular, to a security control method and a network device.

### BACKGROUND

To resolve insecurity of computer structures and fundamentally improve reliability of computers, the Trusted Computing Platform Alliance (English: Trusted Computing Platform Alliance, TCPA for short) is formed in the industry. The TCPA defines a trusted platform module (English: Trusted Platform Module, TPM for short) having secure storage and encryption functions. In March 2003, the TCPA was reorganized into the Trusted Computing Group (English: Trusted Computing Group, TCG for short).

The TCG defines "trusted" as: When an entity realizes a given objective, the entity is trusted if a behavior of the entity is always the same as that expected.

A main method of trusted computing is to perform identity validation, perform storage protection by using encryption, and perform integrity protection by using integrity measurement. A basic idea is to first establish a root of trust in a computer system and then establish a chain of trust. One level measures and authenticates another level and one level trusts another level, extending a trust relationship to the entire computer system, and thereby ensuring reliability of the computer system. Specifically, a TPM chip first measures integrity of current underlying firmware. If a result of the measurement is correct, the TPM chip implements normal system initialization. Then, the underlying firmware measures integrity of a basic input/output system (English: Basic Input/Output System, BIOS for short). If a result of the measurement is correct, the BIOS continues to measure integrity of an operating system. If a result of the measurement is correct, the BIOS runs the operating system normally; otherwise, the BIOS stops running the operating system. Then, the operating system measures an application and a new operating system component. After the operating system starts, a user determines whether to continue to trust this system platform. In this way, reliability of the system platform is ensured by a process of establishing a chain of trust.

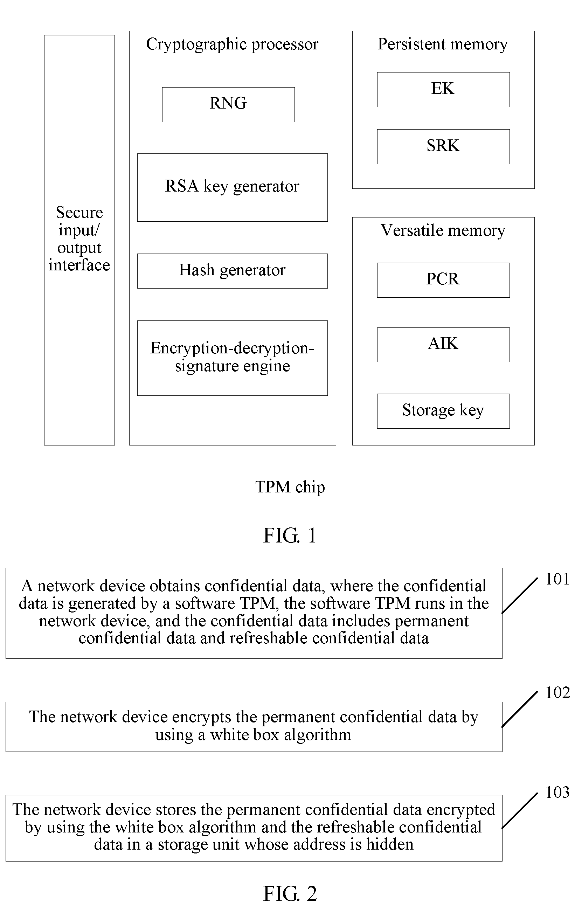

Refer to FIG. 1, which is a functional block diagram of a TPM chip. The TPM chip includes a secure input/output interface, a cryptographic processor (English: Cryptographic Processor, GP for short), a persistent memory (English: Persistent Memory, PM for short), and a versatile memory (English: Versatile Memory, VM for short). The secure input/output interface is used for communicating with an element external to the TPM chip. The cryptographic processor includes a random number generator (English: Random number generator, RNG for short) used for generating a random number. The cryptographic processor further includes an RSA key generator used for generating an RSA-type signature key and an RSA-type storage key. The cryptographic processor further includes a hash generator used for executing a hash algorithm. The cryptographic processor further includes an encryption-decryption-signature engine (encryption-decryption-signature engine). The persistent memory is used for storing an endorsement key (English: Endorsement Key, EK for short) and a storage root key (English: Storage Root Key, SRK for short). The versatile memory includes a platform configuration register (English: Platform Configuration Register, PCR for short). The PCR is a register used for recording a system operating status. The versatile memory is further used for storing an attestation identity key (English: Attestation Identity Key, AIK for short) and a storage key (storage key). It can be seen from the forgoing description that the generators and the engine are built in the TPM chip, so that these generators and the engine are not easily tampered with, and reliability of a program used for reliability measurement is ensured. Further, the EK and the SRK are both stored in the persistent memory, and this part is read-only permanently and cannot be modified. Data in the PCR, the AIK and the storage key may be refreshed periodically, and a special read-write manner is specified for the TPM chip to ensure data security. Patent application US2010031370 discloses a system describing a TPM implemented in software based on an underlying TPM chip.

However, in many devices, the TPM chip is not a standard system accessory. Therefore, a design for implementing functions of a TPM chip by using software, which is referred to as a software TPM, appears.

### SUMMARY

This application provides a security control method and a network device, so as to resolve a technical problem in the prior art that security of a system is relatively low when functions of a TPM chip are implemented by using software.

A first aspect of this application provides a security control method, including:
obtaining, by a network device, confidential data, where the confidential data is generated by a software trusted platform module TPM, the software TPM runs in the network device, and the confidential data includes permanent confidential data and refreshable confidential data, where the permanent confidential data is data that cannot be updated during a startup process of the network device and the refreshable confidential data is data that can be updated during a startup process of the network device;
encrypting, by the network device, the permanent confidential data by using a white box algorithm; and
storing, by the network device, the permanent confidential data encrypted by using the white box algorithm and the refreshable confidential data in a storage unit whose address is hidden.

With reference to the first aspect, in a first possible implementation manner of the first aspect, the method further includes: performing, by the network device, when receiving an access operation on data that is stored in the storage unit whose address is hidden, policy control on the access operation by using an access control policy.

With reference to the first aspect, in a second possible implementation manner of the first aspect, the method further includes: performing, by the network device, when receiving an access operation on the software TPM, policy control on the access operation by using an access control policy.

With reference to the first aspect, the first possible implementation manner of the first aspect, or the second possible implementation manner of the first aspect, in a third possible implementation manner of the first aspect, the method further includes: isolating, by the network device, a process that is related to the software TPM and a process that is not related to the software TPM.

With reference to any one of the first aspect or the first possible implementation manner of the first aspect to the third possible implementation manner of the first aspect, in a fourth possible implementation manner of the first aspect, the method further includes: setting, by the network device, a first process not to directly interact with outside of the network device, where the first process is a process interacting with the process that is related to the software TPM.

With reference to any one of the first aspect or the first possible implementation manner of the first aspect to the fourth possible implementation manner of the first aspect, in a fifth possible implementation manner of the first aspect, the permanent confidential data is an endorsement key EK, and the refreshable confidential data includes a storage root key SRK, a platform configuration register PCR, an attestation identity key AIK, and a storage key.

A second aspect of this application provides a network device, including:
an obtaining unit, configured to obtain confidential data, where the confidential data is generated by a software trusted platform module TPM, the software TPM runs in the network device, and the confidential data includes permanent confidential data and refreshable confidential data, where the permanent confidential data is data that cannot be updated during a startup process of the network device and the refreshable confidential data is data that can be updated during a startup process of the network device; and
a processing unit, configured to encrypt the permanent confidential data by using a white box algorithm, and store the permanent confidential data encrypted by using the white box algorithm and the refreshable confidential data in a storage unit whose address is hidden.

With reference to the second aspect, in a first possible implementation manner of the second aspect, the processing unit is further configured to perform, when receiving an access operation on data that is stored in the storage unit whose address is hidden, policy control on the access operation by using an access control policy.

With reference to the second aspect, in a second possible implementation manner of the second aspect, the processing unit is further configured to perform, when receiving an access operation on the software TPM, policy control on the access operation by using an access control policy.

With reference to the second aspect, the first possible implementation manner of the second aspect, or the second possible implementation manner of the second aspect, in a third possible implementation manner of the second aspect, the processing unit is further configured to isolate a process that is related to the software TPM and a process that is not related to the software TPM.

With reference to any one of the second aspect or the first possible implementation manner of the second aspect to the third possible implementation manner of the second aspect, in a fourth possible implementation manner of the second aspect, the processing unit is further configured to set a first process not to directly interact with outside of the network device, where the first process is a process interacting with the process that is related to the software TPM.

With reference to any one of the second aspect or the first possible implementation manner of the second aspect to the fourth possible implementation manner of the second aspect, in a fifth possible implementation manner of the second aspect, the permanent confidential data is an endorsement key EK, and the refreshable confidential data includes a storage root key SRK, a platform configuration register PCR, an attestation identity key AIK, and a storage key.

One or more technical solutions provided in embodiments of this application have at least the following technical effects or advantages:

In the embodiments of this application, a network device encrypts, by using a white box algorithm, permanent confidential data generated by a software TPM, and then stores the permanent confidential data encrypted by using the white box algorithm and refreshable confidential data generated by the software TPM in a storage unit whose address is hidden. The refreshable confidential data and the permanent confidential data encrypted by using the white box algorithm are stored in the storage unit whose address is hidden, and because the address is hidden, the address is invisible to an application, so that a hacker cannot easily find the storage address of the confidential data, and therefore cannot tamper with the confidential data. Further, even if the hidden storage address is found, a hacker cannot easily crack the permanent confidential data because the permanent confidential data is encrypted by using the white box algorithm, thereby further ensuring data security. Therefore, the method in the embodiments of this application can improve system security when functions of a TPM chip are implemented by using software.

### BRIEF DESCRIPTION OF DRAWINGS

FIG. 1 is a functional block diagram of a TPM chip in the prior art;
FIG. 2 is a flowchart of a security control method according to an embodiment of this application;
FIG. 3 is a functional block diagram of a network device according to an embodiment of this application; and
FIG. 4 is a system block diagram of a network device according to an embodiment of this application.

### DESCRIPTION OF EMBODIMENTS

Embodiments of this application provide a security control method and a network device, so as to resolve a technical problem in the prior art that security of a system is relatively low when functions of a TPM chip are implemented by using software.

When functions of a TPM chip are implemented by using software, the functions are vulnerable to malicious tampering. Therefore, when functions of a TPM chip are implemented by using software, it is very important to improve program and storage security. In the embodiments of this application, storage security is improved by performing encryption and hidden storage processing on confidential data.

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are merely some but not all of the embodiments of this application. All other embodiments obtained by persons of ordinary skill in the art based on the embodiments of this application without creative efforts shall fall within the protection scope of this application.

An embodiment of this application provides a security control method. The method is applied to a system startup process and an operation process after the startup. Refer to FIG. 2, which is a flowchart of the security control method of this embodiment. The method includes the following content:
Step 101: A network device obtains confidential data, where the confidential data is generated by a software TPM, the software TPM runs in the network device, and the confidential data includes permanent confidential data and refreshable confidential data, where the permanent confidential data is data that cannot be updated during a startup process of the network device and the refreshable confidential data is data that can be updated during a startup process of the network device.
Step 102: The network device encrypts the permanent confidential data by using a white box algorithm.
Step 103: The network device stores the permanent confidential data encrypted by using the white box algorithm and the refreshable confidential data in a storage unit whose address is hidden.

Specifically, one type of the confidential data in step 101 is confidential data that the software TPM originally has, and another type is data generated when the software TPM is run. The confidential data generated by the software TPM includes, for example, an EK, an SRK, a PCR, an AIK, and a storage key. All the confidential data can be updated except the EK.

After the confidential data is obtained in step 101, if the obtained confidential data includes permanent confidential data, for example an EK, proceed to perform step 102, that is, encrypting the permanent confidential data by using a white box algorithm. Then, perform step 103: storing the permanent confidential data encrypted by using the white box algorithm in a storage unit whose address is hidden. For refreshable confidential data, for example, an AIK, directly perform step 103, that is, storing the refreshable confidential data in a storage unit whose address is hidden. Optionally, step 102 and the part of storing the refreshable confidential data in step 103 may be performed at the same time; or step 102 is first performed and step 103 is then performed. The actions of storing two types of data in step 103 may occur at the same time or may occur successively.

In the embodiment, a startup process of the network device includes the system startup process and a process in which the system operates until the system is shut down.

In step 102, the permanent confidential data is encrypted by using a white box algorithm. By means of an information hiding method, the white box algorithm randomly hashes the permanent confidential data in storage space by using a lookup table. In this way, security of the permanent confidential data is improved. In practical applications, multiple algorithms may be used, such as a white-box data encryption standard (English: Data Encryption Standard, DES for short) algorithm and a white-box advanced encryption standard (English: Advanced Encryption Standard, AES for short) algorithm.

Optionally, for the network device, once a white box algorithm is determined, the network device is unique to the white box algorithm. In this way, cracking of a white box algorithm of one network device can be prevented from spreading to another network device.

In step 103, the permanent confidential data encrypted by using a white box algorithm and the refreshable confidential data are stored in a storage unit whose address is hidden. Because the address of the storage unit is hidden, when the confidential data is stored in the storage unit, first, a driver library is loaded by using a designated user identifier (ID) or a group ID, then the confidential data is stored, and the driver library is unloaded after the storage is completed. In this way, the address of the storage unit is invisible again, and for a non-designated user ID or group ID, no read/write operation can be performed on the storage unit.

Specifically: hide an input/output (Input/Output, IO) initialization context (context); call a user ID or a group ID, and allocate a context handle and an IO buffer; enable the storage unit to be visible to execution of an IO operation; call an IO interface, and enter the context handle and the IO; input a parameter to perform a validity check; perform an IO read/write operation; after the operation is completed, close the IO operation, enable the address of the storage unit to be invisible, and close the context handle.

Optionally, if the network device receives, after storing the confidential data by using step 103, an access operation on data that is stored in the storage unit whose address is hidden, the network device performs policy control on the access operation by using an access control policy. Specifically, the access control policy is, for example, a discretionary access control (English: Discretionary Access Control, DAC for short) policy or a mandatory access control (English: Mandatory Access Control, MAC for short) policy. If the policy is successfully matched, the access operation is performed. If the policy is not successfully matched, the access operation is rejected, so as to ensure security of the confidential data.

Optionally, when receiving an access operation on the software TPM, the network device performs policy control on the access operation by using an access control policy. In other words, in this embodiment, an access operation on the software TPM itself also needs to be controlled by using an access control policy, so as to avoid as far as possible tampering of the software TPM itself by a hacker, thereby ensuring security of the software TPM itself.

Optionally, before the performing policy control on the access operation by using an access control policy, the method further includes: performing trusted computing on the access control policy, so as to determine that the access control policy is trusted. Because the access control policy may be tampered with during a startup or operation process of the network device, performing trusted computing on the access control policy can ensure that the access control policy is trusted. In this way, the policy control performed on the access operation by using the access control policy is correct.

Optionally, an access operation that violates the access control policy is recorded in a security log and an alarm may be given.

Optionally, before the recording an access operation that violates the access control policy in a security log, the method further includes: performing trusted computing on program code that is used for recording the security log, so as to determine whether the program code is trusted. The recorded security log is trusted only when the program code is trusted.

With reference to the forgoing embodiments, the method further includes: when receiving a request for performing an operation on a resource of the network device, performing rights control on the operator. The resource of the network device includes a file, a port, a process, a function, an input/output device, a socket, and the like of the network device. The request for performing an operation may include a creation request, an access request, a call request, and a setting request.

In a case in which rights are insufficient, an operation on these resources is prevented, so that risk expansion brought by hacker intrusion is avoided.

Optionally, an independent loadable architecture is used for a security module that performs rights control, thereby avoiding affecting the entire network device.

With reference to the forgoing embodiments, the method further includes: isolating, by the network device, a process that is related to the software TPM and a process that is not related to the software TPM.

Specifically, the process that is related to the software TPM includes, for example, a lawful interception process, an encryption and decryption process, and a trusted computing process. Because the process that is related to the software TPM and the process that is not related to the software TPM are isolated from each other, an attack on the process that is not related to the software TPM does not affect the process that is related to the software TPM.

Further, protocols in the network device may be classified into two types: one type is protocols that are for connection to the outside, and the other type is protocols that are not for connection to the outside. For example, the software TPM is a protocol that is not for connection to the outside. A protocol that is for connection to the outside is, for example, a routing protocol, a management protocol, or an interconnection protocol.

Optionally, the method further includes: setting a first process not to directly interact with outside of the network device, where the first process is a process interacting with the process that is related to the software TPM. In other words, the first process cannot be a process of a protocol that is for connection to the outside, but needs to be a process of a protocol that is not for connection to the outside, and the first process may interact with the outside of the network device in an indirect manner. In this way, the first process is not easily attacked, and the process that is related to the software TPM is also not easily attacked. The method may be considered as a first defense layer.

The foregoing method of isolating the process that is related to the software TPM and the process that is not related to the software TPM may be considered as a second defense layer. In other words, even if a hacker cracks the first defense layer, difficulty in attacking the software TPM can be increased because the process that is related to the software TPM is isolated from the first process.

Optionally, the access policy control and the rights control that are described above may be considered as a third defense layer.

It can be seen from the forgoing description that in this embodiment, permanent confidential data generated by a software TPM is encrypted by using a white box algorithm, and then the permanent confidential data encrypted by using the white box algorithm and refreshable confidential data generated by the software TPM are stored in a storage unit whose address is hidden. The refreshable confidential data and the permanent confidential data encrypted by using the white box algorithm are stored in the storage unit whose address is hidden, and because the address is hidden, the address is invisible to an application, so that a hacker cannot easily find the storage address of the confidential data, and therefore cannot tamper with the confidential data. Further, even if the hidden storage address is found, a hacker cannot easily crack the permanent confidential data because the permanent confidential data is encrypted by using the white box algorithm, thereby further ensuring data security.

Further, an access operation on the hidden storage unit is also controlled by using an access control policy, thereby further improving the data security.

Further, access control is also performed on the software TPM itself, a process that is related to the software TPM and a process that is not related to the software TPM are isolated from each other, and a process interacting with the process that is related to the software TPM is set not to directly interact with outside of the network device. Therefore, security of the software TPM itself is improved, and a risk that the software TPM itself is attacked is reduced.

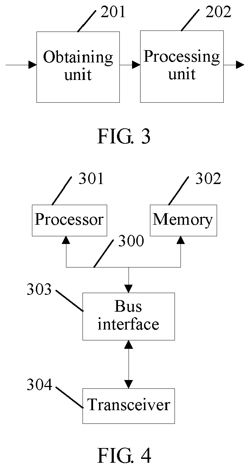

Based on a same inventive concept, an embodiment of this application further provides a network device. Referring to FIG. 3, the network device includes: an obtaining unit 201, configured to obtain confidential data, where the confidential data is generated by a software TPM, the software TPM runs in the network device, and the confidential data includes permanent confidential data and refreshable confidential data, where the permanent confidential data is data that cannot be updated during a startup process of the network device, and the refreshable confidential data is data that can be updated during a startup process of the network device; and a processing unit 202, configured to encrypt the permanent confidential data by using a white box algorithm, and store the permanent confidential data encrypted by using the white box algorithm and the refreshable confidential data in a storage unit whose address is hidden.

Optionally, the processing unit 202 is further configured to perform, when receiving an access operation on data that is stored in the storage unit whose address is hidden, policy control on the access operation by using an access control policy.

Optionally, the processing unit 202 is further configured to perform, when receiving an access operation on the software TPM, policy control on the access operation by using an access control policy.

With reference to the forgoing embodiments, the processing unit 202 is further configured to isolate a process that is related to the software TPM and a process that is not related to the software TPM.

With reference to the forgoing embodiments, the processing unit 202 is further configured to set a first process not to directly interact with outside of the network device, where the first process is a process interacting with the process that is related to the software TPM.

With reference to the forgoing embodiments, the permanent confidential data is an endorsement key (EK), and the refreshable confidential data includes a storage root key (SRK), a platform configuration register (PCR), an attestation identity key (AIK), and a storage key.

Various variations and specific examples in the security control method of the foregoing embodiment in FIG. 2 also apply to the network device of this embodiment. From the forgoing detailed description of the security control method, persons skilled in the art can clearly know a method for implementing the network device of this embodiment. Therefore, the details are not described herein for brevity of this specification.

Based on a same inventive concept, an embodiment of this application further provides a network device. FIG. 4 is a system block diagram of the network device of this embodiment of this application. As shown in FIG. 4, the network device includes a bus architecture (represented by a bus 300). The bus 300 may include any quantity of interconnected buses and bridges, and the bus 300 links together various circuits that include one or more processors represented by a processor 301 and memories represented by a memory 302. The bus 300 may further link various other circuits, such as a peripheral device, a voltage stabilizer, and a power management circuit. These are known in the art, and therefore are not further described in this specification. A bus interface 303 provides an interface between the bus 300 and the processor 301 and an interface between the bus 300 and a transceiver 304. The transceiver 304 is configured to perform data communication between the network device and an external device.

The processor 301 is responsible for managing the bus 300 and common processing. In addition to the memory 302, there is another memory whose address is not hidden, and the memory whose address is not hidden may be configured to store data that is used by the processor 301 when the processor 301 performs an operation.

In this embodiment of this application, the memory whose address is not hidden is configured to store an instruction, and the processor 301 is configured to execute the instruction to obtain confidential data, where the confidential data is generated by a software TPM, the software TPM runs in the network device, and the confidential data includes permanent data and refreshable confidential data, where the permanent confidential data is data that cannot be updated during a startup process of the network device, and the refreshable confidential data is data that can be updated during a startup process of the network device; and
the processor 301 is further configured to execute the instruction to encrypt the permanent confidential data by using a white box algorithm, store the permanent confidential data encrypted by using the white box algorithm and the refreshable confidential data in the memory 302, and hide an address of the memory 302.

In this embodiment of this application, optionally, the processor 301 is further configured to execute the instruction to perform, when receiving an access operation on data stored in the memory 302, policy control on the access operation by using an access control policy.

In this embodiment of this application, optionally, the processor 301 is further configured to execute the instruction to perform, when receiving an access operation on the software TPM, policy control on the access operation by using an access control policy.

With reference to the forgoing embodiments, the processor 301 is further configured to execute the instruction to isolate a process that is related to the software TPM and a process that is not related to the software TPM.

With reference to the forgoing embodiments, the processor 301 is further configured to execute the instruction to set a first process not to directly interact with outside of the network device, where the first process is a process interacting with the process that is related to the software TPM.

With reference to the forgoing embodiments, the permanent confidential data is an endorsement key (EK), and the refreshable confidential data includes a storage root key (SRK), a platform configuration register (PCR), an attestation identity key (AIK), and a storage key.

Therefore, in this embodiment of this application, the network device encrypts, by using a white box algorithm, permanent confidential data generated by a software TPM, and then stores the permanent confidential data encrypted by using the white box algorithm and refreshable confidential data generated by the software TPM in a storage unit whose address is hidden, so that system security can be improved when functions of a TPM chip are implemented by using software.

Various variations and specific examples in the security control method of the foregoing embodiment in FIG. 2 also apply to the network device of this embodiment. From the forgoing detailed description of the security control method, persons skilled in the art can clearly know a method for implementing the network device of this embodiment. Therefore, the details are not described herein for brevity of this specification.

One or more technical solutions provided in the embodiments of this application have at least the following technical effects or advantages:

In the embodiments of this application, a network device encrypts, by using a white box algorithm, permanent confidential data generated by a software TPM, and then stores the permanent confidential data encrypted by using the white box algorithm and refreshable confidential data generated by the software TPM in a storage unit whose address is hidden. The refreshable confidential data and the permanent confidential data encrypted by using the white box algorithm are stored in the storage unit whose address is hidden, and because the address is hidden, the address is invisible to an application, so that a hacker cannot easily find the storage address of the confidential data, and therefore cannot tamper with the confidential data. Further, even if the hidden storage address is found, a hacker cannot easily crack the permanent confidential data because the permanent confidential data is encrypted by using the white box algorithm, thereby further ensuring data security. Therefore, the method in the embodiments of this application can improve system security when functions of a TPM chip are implemented by using software.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, persons skilled in the art can make various modifications and variations to this application without departing from the scope of this application. This application is intended to cover these modifications and variations provided that they fall within the scope of protection defined by the following claims and their equivalent technologies.

## Claims

1. A security control method, comprising:
obtaining (101), by a network device, confidential data, wherein the confidential data is generated by a software trusted platform module, TPM, the software TPM runs in the network device, and the confidential data comprises permanent confidential data and refreshable confidential data, wherein the permanent confidential data is data that cannot be updated during a startup process of the network device and the refreshable confidential data is data that can be updated during a startup process of the network device;
encrypting (102), by the network device, the permanent confidential data by using a white box algorithm; and
storing (103), by the network device, the permanent confidential data encrypted by using the white box algorithm and the refreshable confidential data in a storage unit whose address is hidden.

2. The method according to claim 1, further comprising:
performing, by the network device, when receiving an access operation on data that is stored in the storage unit whose address is hidden, policy control on the access operation by using an access control policy.

3. The method according to claim 1, further comprising:
performing, by the network device, when receiving an access operation on the software TPM, policy control on the access operation by using an access control policy.

4. The method according to any one of claims 1 to 3, further comprising:
isolating, by the network device, a process that is related to the software TPM and a process that is not related to the software TPM.

5. The method according to any one of claims 1 to 4, further comprising:
setting, by the network device, a first process not to directly interact with outside of the network device, wherein the first process is a process interacting with the process that is related to the software TPM.

6. The method according to any one of claims 1 to 5, wherein the permanent confidential data is an endorsement key, EK, and the refreshable confidential data comprises a storage root key, SRK, a platform configuration register, PCR, an attestation identity key, AIK, and a storage key.

7. A network device, comprising:
an obtaining unit (201), configured to obtain confidential data, wherein the confidential data is generated by a software trusted platform module, TPM, the software TPM runs in the network device, and the confidential data comprises permanent confidential data and refreshable confidential data, wherein the permanent confidential data is data that cannot be updated during a startup process of the network device and the refreshable confidential data is data that can be updated during a startup process of the network device; and
a processing unit (202), configured to encrypt the permanent confidential data by using a white box algorithm, and store the permanent confidential data encrypted by using the white box algorithm and the refreshable confidential data in a storage unit whose address is hidden.

8. The network device according to claim 7, wherein the processing unit (202) is further configured to perform, when receiving an access operation on data that is stored in the storage unit whose address is hidden, policy control on the access operation by using an access control policy.

9. The network device according to claim 7, wherein the processing unit (202) is further configured to perform, when receiving an access operation on the software TPM, policy control on the access operation by using an access control policy.

10. The network device according to any one of claims 7 to 9, wherein the processing unit (202) is further configured to isolate a process that is related to the software TPM and a process that is not related to the software TPM.

11. The network device according to any one of claims 7 to 10, wherein the processing unit (202) is further configured to set a first process not to directly interact with outside of the network device, wherein the first process is a process interacting with the process that is related to the software TPM.

12. The network device according to any one of claims 7 to 11, wherein the permanent confidential data is an endorsement key, EK, and the refreshable confidential data comprises a storage root key, SRK, a platform configuration register, PCR, an attestation identity key, AIK, and a storage key.

13. A network device comprising a processor (301), a memory (302), a transceiver (304) and another memory whose address is not hidden, wherein
the processor (301) is communicatable coupled with the memory (302),
the another memory is configured to store an instruction and data that is used by the processor (301) when the processor (301) performs an operation;
the processor (301) is used to
execute the instruction to obtain confidential data, wherein the confidential data is generated by a software trusted platform module, TPM, the software TPM runs in the network device, and the confidential data comprises permanent confidential data and refreshable confidential data, wherein the permanent confidential data is data that cannot be updated during a startup process of the network device and the refreshable confidential data is data that can be updated during a startup process of the network device;
encrypt the permanent confidential data by using a white box algorithm and hide an address of the memory (302);
the memory (302) is configured to store the permanent confidential data encrypted by using the white box algorithm and the refreshable confidential data.

14. The network device according to claim 13, wherein the processor (301) is further configured to execute the instruction to perform, when receiving an access operation on data stored in the memory (302), policy control on the access operation by using an access control policy.

15. The network device according to claim 13 or 14, wherein the permanent confidential data is an endorsement key, EK, and the refreshable confidential data includes a storage root key, SRK, a platform configuration register, PCR, an attestation identity key, AIK, and a storage key.

## Patentansprüche

1. Sicherheitssteuerverfahren, das Folgendes umfasst:
Erhalten (101) vertraulicher Daten durch eine Netzvorrichtung, wobei die vertraulichen Daten durch ein Software-"Trusted-Platform-Module", Software-TPM, erzeugt werden, wobei das Software-TPM in der Netzvorrichtung läuft, und die vertraulichen Daten permanente vertrauliche Daten und erneuerbare vertrauliche Daten umfassen, wobei die permanenten vertraulichen Daten Daten sind, die während eines Anlaufprozesses der Netzvorrichtung nicht aktualisiert werden können, und die erneuerbaren vertraulichen Daten Daten sind, die während eines Anlaufprozesses der Netzvorrichtung aktualisiert werden können;
Verschlüsseln (102) der permanenten vertraulichen Daten durch die Netzvorrichtung, indem ein "White-Box"-Algorithmus verwendet wird; und
Speichern (103) der permanenten vertraulichen Daten, die durch Verwenden des "White-Box"-Algorithmus verschlüsselt sind, und der erneuerbaren vertraulichen Daten durch die Netzvorrichtung in einer Speichereinheit, deren Adresse versteckt ist.

2. Verfahren nach Anspruch 1, das ferner Folgendes umfasst:
Durchführen, wenn ein Zugriffsvorgang auf Daten empfangen wird, die in der Speichereinheit gespeichert sind, deren Adresse versteckt ist, einer Richtliniensteuerung an dem Zugriffsvorgang durch die Netzvorrichtung, indem eine Zugriffssteuerrichtlinie verwendet wird.

3. Verfahren nach Anspruch 1, das ferner Folgendes umfasst:
Durchführen, wenn ein Zugriffsvorgang auf das Software-TPM empfangen wird, einer Richtliniensteuerung an dem Zugriffsvorgang durch die Netzvorrichtung, indem eine Zugriffssteuerrichtlinie verwendet wird.

4. Verfahren nach einem der Ansprüche 1 bis 3, das ferner Folgendes umfasst:
Isolieren eines Prozesses, der mit dem Software-TPM in Zusammenhang steht, und eines Prozesses, der nicht mit dem Software-TPM in Zusammenhang steht, durch die Netzvorrichtung.

5. Verfahren nach einem der Ansprüche 1 bis 4, das ferner Folgendes umfasst:
Einstellen eines ersten Prozesses durch die Netzvorrichtung dazu, nicht direkt mit außerhalb der Netzvorrichtung zu interagieren, wobei der erste Prozess ein Prozess ist, der mit dem Prozess interagiert, der mit dem Software-TPM in Zusammenhang steht.

6. Verfahren nach einem der Ansprüche 1 bis 5, wobei die permanenten vertraulichen Daten ein "Endorsement-Key", EK, sind und die erneuerbaren vertraulichen Daten einen "Storage-Root-Key", SRK, ein "Platform-Configuration-Register", PCR, einen "Attestation-Identity-Key", AIK, und einen Speicherschlüssel umfassen.

7. Netzvorrichtung, die Folgendes umfasst:
eine Erhalteeinheit (201), die zum Erhalten vertraulicher Daten konfiguriert ist, wobei die vertraulichen Daten durch ein Software-"Trusted-Platform-Module", Software-TPM, erzeugt werden, wobei das Software-TPM in der Netzvorrichtung läuft, und die vertraulichen Daten permanente vertrauliche Daten und erneuerbare vertrauliche Daten umfassen, wobei die permanenten vertraulichen Daten Daten sind, die während eines Anlaufprozesses der Netzvorrichtung nicht aktualisiert werden können, und die erneuerbaren vertraulichen Daten Daten sind, die während eines Anlaufprozesses der Netzvorrichtung aktualisiert werden können; und
eine Verarbeitungseinheit (202), die zum Verschlüsseln der permanenten vertraulichen Daten, indem ein "White-Box"-Algorithmus verwendet wird, und zum Speichern der permanenten vertraulichen Daten, die durch Verwenden des "White-Box"-Algorithmus verschlüsselt sind, und der erneuerbaren vertraulichen Daten in einer Speichereinheit, deren Adresse versteckt ist, konfiguriert ist.

8. Netzvorrichtung nach Anspruch 7, wobei die Verarbeitungseinheit (202) ferner zum Durchführen, wenn ein Zugriffsvorgang auf Daten empfangen wird, die in der Speichereinheit gespeichert sind, deren Adresse versteckt ist, einer Richtliniensteuerung an dem Zugriffsvorgang, indem eine Zugriffssteuerrichtlinie verwendet wird, konfiguriert ist.

9. Netzvorrichtung nach Anspruch 7, wobei die Verarbeitungseinheit (202) ferner zum Durchführen, wenn ein Zugriffsvorgang auf das Software-TPM empfangen wird, einer Richtliniensteuerung an dem Zugriffsvorgang, indem eine Zugriffssteuerrichtlinie verwendet wird, konfiguriert ist.

10. Netzvorrichtung nach einem der Ansprüche 7 bis 9, wobei die Verarbeitungseinheit (202) ferner zum Isolieren eines Prozesses, der mit dem Software-TPM in Zusammenhang steht, und eines Prozesses, der nicht mit dem Software-TPM in Zusammenhang steht, konfiguriert ist.

11. Netzvorrichtung nach einem der Ansprüche 7 bis 10, wobei die Verarbeitungseinheit (202) ferner zum Einstellen eines ersten Prozesses dazu konfiguriert ist, nicht direkt mit außerhalb der Netzvorrichtung zu interagieren, wobei der erste Prozess ein Prozess ist, der mit dem Prozess interagiert, der mit dem Software-TPM in Zusammenhang steht.

12. Netzvorrichtung nach einem der Ansprüche 7 bis 11, wobei die permanenten vertraulichen Daten ein "Endorsement-Key", EK, sind und die erneuerbaren vertraulichen Daten einen "Storage-Root-Key", SRK, ein "Platform-Configuration-Register", PCR, einen "Attestation-Identity-Key", AIK, und einen Speicherschlüssel umfassen.

13. Netzvorrichtung, die einen Prozessor (301), einen Speicher (302), einen Sendeempfänger (304) und einen anderen Speicher, dessen Adresse nicht versteckt ist, umfasst, wobei
der Prozessor (301) mit dem Speicher (302) mit Kommunikationsvermögen gekoppelt ist,
der andere Speicher dazu konfiguriert ist, eine Anweisung und Daten, die durch den Prozessor (301) verwendet werden, wenn der Prozessor (301) einen Vorgang durchführt, zu speichern;
der Prozessor (301) verwendet wird zum
Ausführen der Anweisung zum Erhalten vertraulicher Daten, wobei die vertraulichen Daten durch ein Software-"Trusted-Platform-Module", Software-TPM, erzeugt werden, wobei das Software-TPM in der Netzvorrichtung läuft, und die vertraulichen Daten permanente vertrauliche Daten und erneuerbare vertrauliche Daten umfassen, wobei die permanenten vertraulichen Daten Daten sind, die während eines Anlaufprozesses der Netzvorrichtung nicht aktualisiert werden können, und die erneuerbaren vertraulichen Daten Daten sind, die während eines Anlaufprozesses der Netzvorrichtung aktualisiert werden können;
Verschlüsseln der permanenten vertraulichen Daten, indem ein "White-Box"-Algorithmus verwendet wird, und verstecken einer Adresse des Speichers (302);
der Speicher (302) zum Speichern der permanenten vertraulichen Daten, die durch Verwenden des "White-Box"-Algorithmus verschlüsselt sind, und der erneuerbaren vertraulichen Daten konfiguriert ist.

14. Netzvorrichtung nach Anspruch 13, wobei der Prozessor (301) ferner zum Ausführen der Anweisung zum Durchführen, wenn ein Zugriffsvorgang auf Daten empfangen wird, die in dem Speicher (302) gespeichert sind, einer Richtliniensteuerung an dem Zugriffsvorgang, indem eine Zugriffssteuerrichtlinie verwendet wird, konfiguriert ist.

15. Netzvorrichtung nach Anspruch 13 oder 14, wobei die permanenten vertraulichen Daten ein "Endorsement-Key", EK, sind und die erneuerbaren vertraulichen Daten einen "Storage-Root-Key", SRK, ein "Platform-Configuration-Register", PCR, einen "Attestation-Identity-Key", AIK, und einen Speicherschlüssel umfassen.

## Revendications

1. Procédé de contrôle de sécurité, comprenant les étapes suivantes :
obtenir (101), par un dispositif réseau, des données confidentielles, dans lequel les données confidentielles sont générées par un module de plateforme sécurisée, TPM, basé logiciel, le TPM basé logiciel s'exécute dans le dispositif réseau, et les données confidentielles comportent des données confidentielles permanentes et des données confidentielles pouvant être rafraîchies, les données confidentielles permanentes étant des données qui ne peuvent pas être mises à jour durant un processus de démarrage du dispositif réseau et les données confidentielles pouvant être rafraîchies étant des données qui peuvent être mises à jour durant un processus de démarrage du dispositif réseau ;
crypter (102), par le dispositif réseau, les données confidentielles permanentes en utilisant un algorithme de boîte blanche ; et
stocker (103), par le dispositif réseau, les données confidentielles permanentes cryptées en utilisant l'algorithme de boîte blanche et les données confidentielles pouvant être rafraîchies dans une unité de stockage dont l'adresse est cachée.

2. Procédé selon la revendication 1, comprenant en outre :
exécuter, par le dispositif réseau, lors de la réception d'une opération d'accès sur des données qui sont stockées dans l'unité de stockage dont l'adresse est cachée, un contrôle de politique sur l'opération d'accès en utilisant une politique de contrôle d'accès.

3. Procédé selon la revendication 1, comprenant en outre :
exécuter, par le dispositif réseau, lors de la réception d'une opération d'accès sur le TPM basé logiciel, un contrôle de politique sur l'opération d'accès en utilisant une politique de contrôle d'accès.

4. Procédé selon l'une quelconque des revendications 1 à 3, comprenant en outre :
isoler, par le dispositif réseau, un processus qui est associé au TPM basé logiciel et un processus qui n'est pas associé au TPM basé logiciel.

5. Procédé selon l'une quelconque des revendications 1 à 4, comprenant en outre :
paramétrer, par le dispositif réseau, un premier processus pour qu'il n'interagisse pas directement avec l'extérieur du dispositif réseau, le premier processus étant un processus interagissant avec le processus qui est associé au TPM basé logiciel.

6. Procédé selon l'une quelconque des revendications 1 à 5, dans lequel les données confidentielles permanentes sont une clé d'endossement, EK, et les données confidentielles pouvant être rafraîchies comprennent une clé racine de stockage, SRK, un registre de configuration de plateforme, PCR, une clé d'identité d'attestation, AIK, et une clé de stockage.

7. Dispositif réseau, comprenant :
une unité d'obtention (201), configurée pour obtenir des données confidentielles, les données confidentielles étant générées par un module de plateforme sécurisée, TPM, basé logiciel, le TPM basé logiciel s'exécutant dans le dispositif réseau, et les données confidentielles comprenant des données confidentielles permanentes et des données confidentielles pouvant être rafraîchies ; les données confidentielles permanentes étant des données qui ne peuvent pas être mises à jour durant un processus de démarrage du dispositif réseau et les données confidentielles pouvant être rafraîchies étant des données qui peuvent être mises à jour durant un processus de démarrage du dispositif réseau ; et
une unité de traitement (202), configurée pour crypter les données confidentielles permanentes en utilisant un algorithme de boîte blanche, et stocker les données confidentielles permanentes cryptées en utilisant l'algorithme de boîte blanche et les données confidentielles pouvant être rafraîchies dans une unité de stockage dont l'adresse est cachée.

8. Dispositif réseau selon la revendication 7, dans lequel l'unité de traitement (202) est en outre configurée pour exécuter, lors de la réception d'une opération d'accès sur des données qui sont stockées dans l'unité de stockage dont l'adresse est cachée, un contrôle de politique sur l'opération d'accès en utilisant une politique de contrôle d'accès.

9. Dispositif réseau selon la revendication 7, dans lequel l'unité de traitement (202) est en outre configurée pour exécuter, lors de la réception d'une opération d'accès sur le TPM basé logiciel, un contrôle de politique sur l'opération d'accès en utilisant une politique de contrôle d'accès.

10. Dispositif réseau selon l'une quelconque des revendications 7 à 9, dans lequel l'unité de traitement (202) est en outre configurée pour isoler un processus qui est associé au TPM basé logiciel et un processus qui n'est pas associé au TPM basé logiciel.

11. Dispositif réseau selon l'une quelconque des revendications 7 à 10, dans lequel l'unité de traitement (202) est en outre configurée pour paramétrer un premier processus pour qu'il n'interagisse pas directement avec l'extérieur du dispositif réseau, le premier processus étant un processus interagissant avec le processus qui est associé au TPM basé logiciel.

12. Dispositif réseau selon l'une quelconque des revendications 7 à 11, dans lequel les données confidentielles permanentes sont une clé d'endossement, EK, et les données confidentielles pouvant être rafraîchies comprennent une clé racine de stockage, SRK, un registre de configuration de plateforme, PCR, une clé d'identité d'attestation, AIK, et une clé de stockage.

13. Dispositif réseau comprenant un processeur (301), une mémoire (302), un émetteur-récepteur (304) et une autre mémoire dont l'adresse n'est pas cachée, dans lequel :
le processeur (301) est couplé de manière communicative avec la mémoire (302),
la une autre mémoire est configurée pour stocker une instruction et des données qui sont utilisées par le processeur (301) lorsque le processeur (301) exécute une opération ;
le processeur (301) est utilisé pour
exécuter l'instruction pour obtenir des données confidentielles, les données confidentielles étant générées par un module de plateforme sécurisée, TPM, basé logiciel, le TPM basé logiciel s'exécutant dans le dispositif réseau, et les données confidentielles comprenant des données confidentielles permanentes et des données confidentielles pouvant être rafraîchies ; les données confidentielles permanentes étant des données qui ne peuvent pas être mises à jour durant un processus de démarrage du dispositif réseau et les données confidentielles pouvant être rafraîchies étant des données qui peuvent être mises à jour durant un processus de démarrage du dispositif réseau ;
crypter les données confidentielles permanentes en utilisant un algorithme de boîte blanche et cacher une adresse de la mémoire (302) ;
la mémoire (302) est configurée pour stocker les données confidentielles permanentes cryptées en utilisant l'algorithme de boîte blanche et les données confidentielles pouvant être rafraîchies.

14. Dispositif réseau selon la revendication 13, dans lequel le processeur (301) est en outre configuré pour exécuter l'instruction mettant en oeuvre, lors de la réception d'une opération d'accès sur des données stockées dans la mémoire (302), un contrôle de politique sur l'opération d'accès en utilisant une politique de contrôle d'accès.

15. Dispositif réseau selon la revendication 13 ou 14, dans lequel les données confidentielles permanentes sont une clé d'endossement, EK, et les données confidentielles pouvant être rafraîchies comprennent une clé racine de stockage, SRK, un registre de configuration de plateforme, PCR, une clé d'identité d'attestation, AIK, et une clé de stockage.
